Europäisches Patentamt

European Patent Office

Office européen des brevets

(11) Veröffentlichungsnummer: **0 448 585 B1**

(12) **EUROPÄISCHE PATENTSCHRIFT**

(45) Veröffentlichungstag der Patentschrift:
14.10.92 Patentblatt 92/42

(51) Int. Cl.⁵: **B01D 53/36**, B01J 21/18, B01J 27/06, C01B 31/08, B01J 37/22

(21) Anmeldenummer: 90900190.1

(22) Anmeldetag: 14.12.89

(86) Internationale Anmeldenummer:
PCT/EP89/01537

(87) Internationale Veröffentlichungsnummer:
WO 90/06803 28.06.90 Gazette 90/15

(54) **VERFAHREN ZUR HERSTELLUNG EINES KATALYSATORS ZUR ENTFERNUNG VON STICKSTOFFOXIDEN AUS ABGASEN.**

(30) Priorität: 17.12.88 DE 3842526

(43) Veröffentlichungstag der Anmeldung:
02.10.91 Patentblatt 91/40

(45) Bekanntmachung des Hinweises auf die Patenterteilung:
14.10.92 Patentblatt 92/42

(84) Benannte Vertragsstaaten:
AT DE IT NL

(56) Entgegenhaltungen:
WO-A-88/08748
DE-A- 2 350 498
DE-A- 2 603 910
US-A- 3 662 523

(73) Patentinhaber: Bergwerksverband GmbH
Franz-Fischer-Weg 61
W-4300 Essen 13 (DE)

(72) Erfinder: KNOBLAUCH, Karl
Forsthausstrasse 22
W-4300 Essen 1 (DE)
Erfinder: RICHTER, Ekkehard
Schmachtenbergstrasse 89
W-4300 Essen 18 (DE)
Erfinder: SCHMIDT, Hans-Jürgen
Giradetstrasse 65
W-4300 Essen 1 (DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung eines Katalysators zur Entfernung von Stickstoffoxiden aus Abgasen unter Zuführung von Ammoniak, wobei der Katalysator, der aus einem kohlenstoffhaltigen Material besteht, mit einem Halogen oder einer Halogenverbindung behandelt wird.

Aus der DE-A- 23 50 498 ist ein Verfahren zur Entfernung von Stickstoffoxiden aus Abgasen bekannt, bei dem kohlenstoffhaltiges Adsorptionsmittel, wie z. B. Aktivkohle, mit wäßriger Halogenwasserstofflösung oder einer zum leichten Freisetzen von Halogenen geeigneten Verbindung imprägniert, anschließend getrocknet und danach in Gegenwart von Ammoniakgas bei Temperaturen von 60 - 150° C in Kontakt gebracht wird. Durch die Halogenbehandlung wird die katalytische Aktivität des kohlenstoffhaltigen Materials gesteigert.

Bei diesem Verfahren ist es von Nachteil, daß bei der Reaktion mit Stickoxiden das Halogen, z. B. Brom, freigesetzt wird, so daß die katalytische Aktivität wieder abnimmt. Das freigesetzte Halogen reagiert mit Ammoniak unter Bildung von Ammoniumhalogenid. Damit das Halogen bzw. das Ammoniumhalogenid nicht an die Atmosphäre abgegeben wird, muß der Adsorptionsmittelschicht eine weitere Adsorptionsmittelschicht nachgeschaltet werden, in der das freigesetzte Brom bzw. Ammoniumbromid adsorbiert wird.

Der Erfindung liegt die Aufgabe zugrunde, das Verfahren der eingangs genannten Gattung dahingehend weiterzuentwickeln, daß bei der Anwendung des Katalysators keine Freisetzung eines Halogens bzw. einer Halogenverbindung erfolgt und die katalytische Aktivität des kohlenstoffhaltigen Materials erhalten bleibt.

Diese Aufgabe wird durch die im Kennzeichen des Anspruchs 1 niedergelegten Merkmale gelöst.

Zweckmäßige Weiterbildungen des Verfahrens sind in den Unteransprüchen 2 bis 6 aufgeführt.

Durch Versuche hat sich überraschend herausgestellt, daß durch die erfindungsgemäße Behandlung aus der Gasphase Halogene irreversibel an den kohlenstoffhaltigen Adsorptionsmitteln adsorbiert werden.

Das irreversibel gebundene Halogen reagiert nicht mit Ammoniak zu Ammoniumhalogenid. Es findet somit keine Abtragung des Halogens bzw. des Ammoniumhalogenids statt. Es genügen daher vergleichsweise geringe Mengenanteile für die Dotierung.

Ein weiterer Vorteil des erfindungsgemäßen Verfahrens ist, daß sich kein Ammoniumnitrat oder Ammoniumnitrit auf den erfindungsgemäß behandelten kohlenstoffhaltigen Adsorptionsmitteln bilden.

Bei der Reduktion von Stickstoffoxiden mit Ammoniak an kohlenstoffhaltigen Adsorptionsmitteln ist bei Temperaturen um 100° C eine - wenn auch geringfügige - Ammoniumnitrat- und Ammoniumnitritbildung und -anreicherung beobachtet worden.

Aus der US-A-3 662 523 ist weiterhin ein Verfahren zur Herstellung eines Adsorbensmaterials bekannt, das durch Behandeln eines kohlenstoffhaltigen Materials mit einer Halogenverbindung aus der Gasphase gewonnen wird und zur Adsorption von Quecksilber geeignet ist, wobei der gasförmigen Halogenverbindung erwärmte Luft zugemischt wird, um das kohlenstoffhaltige Material mit der Halogenverbindung zu imprägnieren. Ein solches kohlenstoffhaltiges Material eignet sich jedoch nicht als Katalysator zur Entfernung von Stickstoffoxiden aus Abgasen unter Zuführung von Ammoniak, weil eine solche Halogenverbindung nicht stabil ist und die Vermischung der Halogenverbindung mit Luft zu unkontrollierbaren Sauerstoffanlagerungen an dem kohlenstoffhaltigen Material führt, die die Eignung als Katalysator zur Entfernung von Stickstoffoxiden aus Abgasen unter Zuführung von Ammoniak beeinträchtigen.

Bei einem Lufthalogengemisch werden zuerst Kohlenstoffoxide auf dem kohlenstoffhaltigen Material aufgebaut, an denen sich die Halogene in einem zweiten Schritt anlagern. Das hat zur Folge, daß bei einer Anwendung dieses kohlenstoffhaltigen Materials als Katalysator die Halogene abgespalten werden, wobald Ammoniak und Stickstoffoxide aus Abgasen zugeführt werden, was zu einer Desaktivierung eines solchen katalysators führt.

Diese Substanzen neigen zu einer spontanen Zersetzung. Da mit den erfindungsgemäß behandelten Adsorptionsmitteln die Ammoniumnitrat- und Nitritbildung bzw. -anreicherung verhindert wird, ist bei der Anwendung von nach dem erfindungsgemäßen Verfahren hergestellten Katalysatoren diese Gefahr nicht gegeben.

Da die Dotierung zweckmäßig bei Temperaturen durchgeführt wird, die oberhalb der späteren Einsatztemperatur liegen, verbleiben die auf das kohlenstoffhaltige Material aufgetragenen Halogene bzw. Halogenverbindungen stabil darauf erhalten, d.h., das Abgas wird nicht mit Halogenverunreinigungen belastet.

Bei Anwendung des erfindungsgemäßen Verfahrens, bei dem die Halogene zweckmäßig im Gemisch mit Inertgas durch die Adsorptionsmittelschüttung geleitet werden, läßt sich die Intensität der Dotierung sehr genau einstellen. Es hat sich z.B. gezeigt, daß bereits ein Mengenanteil von weniger als 1 % Brom ausreichend ist, um leistungsfähige Katalysatoren herzustellen.

Die Erfindung wird nachfolgend anhand von Beispielen näher erläutert.

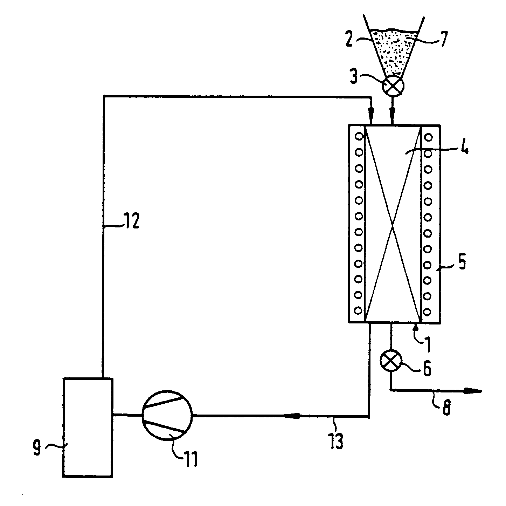

In der Figur der Zeichnung ist schematisch eine Verfahrensführung gemäß der Erfindung dargestellt.

Beim Beispiel gemäß der Figur wird ein Reaktor 1 mit einem kohlenstoffhaltigen Material 7, das katalytische Eigenschaft aufweist, über eine Eingabevorrichtung 2 und eine Zuteilvorrichtung 3 beschickt. Das in der Kammer 4 des Reaktors 1 enthaltene kohlenstoffhaltige Material wird über eine Heizvorrichtung 5 auf eine vorgegebene Temperatur, die vorzugsweise oberhalb 150° C liegt, erhitzt.

Das kohlenstoffhaltige Material in der Kammer 4 kann als Festbett oder aber auch als Wanderbett ausgestaltet sein. Um das kohlenstoffhaltige Material, das bereits im unbehandelten Zustand gewisse katalytische Eigenschaften hat, in einen wesentlich wirksameren Katalysator umzuwandeln, wird das Festbett oder die Wanderschicht in der Kammer 4 mit einem Inertgas durchströmt, das über eine Leitung 12 in die Kammer 4 eingeleitet wird und dem gasförmige Halogene oder Halogenverbindungen zugemischt sind, z.B. dampfförmiges Brom oder Bromwasserstoff.

Die Zumischung des Halogens bzw. der Halogenverbindung zu dem Inertgas erfolgt in einem Verdampfer 9, der das Halogen oder die Halogenverbindung mit Wasser vermischt oder in einer wäßrigen Lösung enthält. Das Kreislaufgas gibt beim Durchströmen des kohlenstoffhaltigen Materials in der Kammer 4 seine gasförmige Beladung, das Halogen bzw. die Halogenverbindung, an dieses Material ab, aus dem durch die Dotierung ein höherwertiges Katalysatormaterial wird. Letzteres wird über ein Austragsorgan 6 und eine Leitung 8 kontinuierlich (Wanderbett) oder diskontinuierlich (Festbett) aus der Kammer 4 abgezogen.

Der Inertgasanteil des Kreislaufgases gelangt mit der darin noch enthaltenden Restbeladung an dem gasförmigen Halogen bzw. der gasförmigen Halogenverbindung aus der Kammer 4 über eine Leitung 13 und eine Pumpe 11 zurück in den Verdampfer 9.

### Beispiel

In Versuchen wurde nachgewiesen, daß ein handelsüblicher Aktivkoks mit der Handelbezeichnung D 52/4, der von der Anmelderin hergestellt wird, durch Anwendung des erfindungsgemässen Verfahrens in einen höherwertigen Katalysator umgewandelt wird. Der Aktivkoks D52/4 wurde dazu in einer Versuchseinrichtung, wie sie in der Zeichnungsbeschreibung dargestellt ist, mit Bromdampf bei 54° C, 100° C, 150° C, 180° C und 200° C behandelt. Gegenüber unbehandeltem Aktivkoks D52/4 ergaben sich beim Einsatz des bromdotierten Aktivkokses D52/4 in einem Versuchsreaktor, durch den stickoxidhaltiges Gas hindurchgeleitet wurde, Steigerungen der Umsätze an NO und $NH_3$, wie die nachstehende Tabelle 1 ausweist.

Während sich bei den Katalysatoren, die bei Behandlungstemperaturen von 50° C bzw. 100° C bzw. 150° C hergestellt worden sind, Bromabspaltungen im Reaktorversuch ergaben, war dies bei den mit 180° C bzw. 200° C behandelten Katalysatoren nicht der Fall. Die Katalysatorwirkung blieb auch nach einer Versuchszeit von 400 h erhalten. Versuchszeiten ab 100 h sind bei Aktivkoks-Katalysatoren ausreichend, um die Stabilität der Katalysatoren zu überprüfen. In der Praxis können damit erheblich längere Standzeiten erreicht werden.

In ergänzenden Versuchen wurde der Aktivkoks D52/4 statt mit Brom mit Bromwasserstoff behandelt, und zwar bei den zuvor als günstig erwiesenen Behandlungstemperaturen von 180° C und 200° C. Beim Einsatz im Versuchsreaktor ergaben sich vergleichsweise noch günstigere Umsätze von NO und $NH_3$ als bei den mit Bromdampf behandelten Aktivkoksen, wie ebenfalls aus der Tabelle 1 ableitbar ist. Bromabspaltungen traten nicht auf. Der Katalysator ergab auch noch nach 100 h Versuchszeit gute Ergebnisse.

Wie Tabelle 2 ausweist, ist in weiteren Versuchen Aktivkoks D 52/4 bei Behandlungstemperaturen von 180° C und 200° C mit Chlorwasserstoff bzw. Fluorwasserstoff bzw. Jodwasserstoff behandelt worden. Mit den damit dotierten Aktivkoksen konnten ebenfalls bessere Ergebnisse erzielt werden als mit Aktivkoks ohne Dotierung. Allerdings sind diese Ergebnisse nicht ganz so günstig wie die Versuchsergebnisse, die mit Brom bzw. Bromwasserstoff erzielt werden konnten.

## TABELLE 1

| Einsatzmaterial | | | Einfüllhöhe m | Volumen-strom $m^3/h$ | Temperatur °C | NO Eing. ppm | Ausg. ppm | Ums. % | $NH_3$ Eing. ppm | Ausg. ppm | Ums. % | Bemerkungen |
|---|---|---|---|---|---|---|---|---|---|---|---|---|
| **unbehandelter Aktivkoks** | | | | | | | | | | | | |
| D52/4 | unbehandelt | | 0,5 | 1,5 | 100 | 350 | 190 | 46,0 | 200 | 100 | 50,0 | |
| **Behandlung mit Bromdampf** | | | | | | | | | | | | |
| | behandelt | | | | | | | | | | | |
| | mit | bei | | | | | | | | | | |
| D52/4 | $Br_2$ | 50°C | 0,5 | 1,5 | 100 | 350 | 160 | 54,0 | 200 | 35 | 85,0 | Br wird abgespalten |
| D52/4 | $Br_2$ | 100°C | 0,5 | 1,5 | 100 | 350 | 150 | 57,0 | 250 | 30 | 85,0 | |
| D52/4 | $Br_2$ | 150°C | 0,5 | 1,5 | 100 | 350 | 155 | 56,0 | 200 | 35 | 83,0 | Br wird abgespalten |
| D52/4 | $Br_2$ | 180°C | 0,5 | 1,5 | 100 | 350 | 160 | 54,0 | 200 | 30 | 85,0 | Br wird nicht abgespalten |
| D52/4 | $Br_2$ | 200°C | 0,5 | 1,5 | 100 | 350 | 165 | 52,8 | 200 | 45 | 75,0 | Br wird nicht abgespalten |
| | | | | | 120 | 350 | 130 | 63,0 | 200 | 0 | 100,0 | |
| | | | | | 150 | 350 | 110 | 69,0 | 200 | 10 | 35,0 | |
| nach 400 h Versuchszeit | | | | | 100 | 350 | 160 | 54,0 | 200 | 40 | 80,0 | Werte sind stabil geblieben bzw. leicht verbessert |
| **Behandlung mit Bromwasserstoff** | | | | | | | | | | | | |
| | behandelt | | | | | | | | | | | |
| | mit | bei | | | | | | | | | | |
| D52/4 | HBr | 180° C | 0,5 | 1,5 | 100 | 350 | 145 | 53,0 | 200 | 30 | 85,0 | Br wird nicht abgespalten |
| D52/4 | HBr | 200°C | 0,5 | 1,5 | 100 | 350 | 140 | 60,0 | 200 | 30 | 85,0 | Br wird nicht abgespalten |
| | | | | | 150 | 350 | 125 | 64,3 | 200 | 10 | 95,0 | |
| nach 100 h Versuchszeit | | | | | 100 | 350 | 140 | 60,0 | 200 | 25 | 87,5 | Werte sind stabil geblieben |

EP 0 448 585 B1

## TABELLE 2

| Einsatzmaterial | | | Einfüllhöhe | Volumen-strom | Temperatur | NO | | | NH$_3$ | | |
|---|---|---|---|---|---|---|---|---|---|---|---|
| | | | m | m$^3$/h | °C | Eing. ppm | Ausg. ppm | Ums. % | Eing. ppm | Ausg. ppm | Ums. % |

**Behandlung mit Chlorwasserstoff**

| | behandelt | | | | | | | | | | |
|---|---|---|---|---|---|---|---|---|---|---|---|
| | mit | bei | | | | | | | | | |
| D52/4 | HCl | 180°C | 0,5 | 1,5 | 100 | 350 | 165 | 53,0 | 200 | 35 | 83,0 |
| D52/4 | HCl | 200°C | 0,5 | 1,5 | 100 | 350 | 160 | 54,0 | 200 | 35 | 83,0 |

**Behandlung mit Fluorwasserstoff**

| | behandelt | | | | | | | | | | |
|---|---|---|---|---|---|---|---|---|---|---|---|
| | mit | bei | | | | | | | | | |
| D52/4 | HCl | 180°C | 0,5 | 1,5 | 100 | 350 | 168 | 52,0 | 200 | 40 | 80,0 |
| D52/4 | HF | 200°C | 0,5 | 1,5 | 100 | 350 | 165 | 53,0 | 200 | 40 | 80,0 |

**Behandlung mit Jodwasserstoff**

| | behandelt | | | | | | | | | | |
|---|---|---|---|---|---|---|---|---|---|---|---|
| | mit | bei | | | | | | | | | |
| D52/4 | HJ | 180°C | 0,5 | 1,5 | 100 | 350 | 168 | 52,0 | 200 | 40 | 80,0 |
| D52/4 | HJ | 200°C | 0,5 | 1,5 | 100 | 350 | 165 | 53,0 | 200 | 40 | 80,0 |

EP 0 448 585 B1

**Patentansprüche**

1. Verfahren zur Herstellung eines Katalysators zur Entfernung von Stickstoffoxiden aus Abgasen unter Zuführung von Ammoniak durch Behandeln eines kohlenstoffhaltigen Materials mit einem Halogen oder einer Halogenverbindung, **dadurch gekennzeichnet,** daß der Katalysator aus kohlenstoffhaltigem Material mit dem Halogen oder der Halogenverbindung aus der Gasphase behandelt wird, die Behandlung bei Temperaturen oberhalb 150° C vorgenommen wird und das gasförmige Halogen oder die gasförmige Halogenverbindung einem Inertgas zugemischt wird.

2. Verfahren nach Anspruch 1, **dadurch gekennzeichnet,** daß das kohlenstoffhaltige Material einem Reaktor aufgegeben wird und das Gasgemisch aus Inertgas und gasförmigem Halogen oder gasförmiger Halogenverbindung im Kreislauf durch das kohlenstoffhaltige Material hindurchgeleitet wird.

3. Verfahren nach Anspruch 2, **dadurch gekennzeichnet,** daß das Kreislaufgas durch einen Verdampfer hindurchgeführt wird, in dem das Halogen oder die Halogenverbindung enthalten ist.

4. Verfahren nach Anspruch 3, **dadurch gekennzeichnet,** daß das Halogen oder die Halogenverbindung mit Wasser vermischt oder in Wasser gelöst ist.

5. Verfahren nach einem oder mehreren der vorherstehenden Ansprüche, **dadurch gekennzeichnet,** daß als Halogen Brom oder als Halogenverbindung eine Bromverbindung verwendet werden.

6. Verfahren nach Anspruch 5, **dadurch gekennzeichnet,** daß als Bromverbindung Bromwasserstoffsäure verwendet wird.

**Claims**

1. Method of producing a catalyst to remove nitrogen oxides from waste gases under addition of ammonia, and consisting in the treatment of a carbonaceous substance by either a halogen or a halide, characterized in that the catalyst from carbonaceous substance undergoes a treatment, beyond 150°C, either by the halogen or the halide from out of the gas phase for which purpose either the gaseous halogen or the gaseous halide has been blended with an inert gas.

2. Method as per claim 1, characterized in that the carbonaceous substance is fed to a reactor whereafter the blend of inert gas and either gaseous halogen or gaseous halide is circulated through the carbonaceous substance.

3. Method as per claim 2, characterized in that the circulation gas is caused to pass through an evaporator containing either the halogen or the halide.

4. Method as per claim 3, characterized in that either the halogen or the halide is blended with or, alternatively, dissolved in water.

5. Method according to one or several of the aforementioned claims, characterized in that bromine is used as a halogen or, alternatively, some bromide as a halide.

6. Method as per claim 5, characterized in that hydrobromic acid functions as bromide.

**Revendications**

1) Procédé de fabrication d'un catalyseur pour éliminer les oxydes azotiques des gaz de fumée, sous addition d'ammoniaque, par le traitement d'une substance carbonifère à l'aide soit d'un halogène soit d'une halogénure, ce procédé étant caractérisé par ce que le catalyseur, constitué d'une substance carbonifère, sera traité, en-dessus de 15o °C, soit de l'halogène soit de l'halogénure obtenus de la phase gazéiforme et, ensuite, melangés à un gaz inerte.

2) Procédé d'après la revendication n° 1, caractérisé par ce que la substance carbonifère sera chargée dans un réacteur dans lequel le melange de gaz inerte avec soit l'halogène soit L'halogénure gazéiformes sera passé à travers la substance carbonifère.

3) Procédé d'après la revendication n° 2, caractérisé par ce qu'on fera passer le gaz de circulation à travers un évaporateur contenant soit l'halogène soit l'halogénure.

4) Procédé d'après la revendication n° 3, caractérisé par ce que l'halogène ou, alternativement, l'halogénure sera melangé avec ou dissolu dans l'eau.

5) Procédé d'après une ou plusieures des revendications susmentionnées, caractérisé par l'utilisation de brome à titre d'halogène ou d'une bromure à titre d'halogénure.

6) Procédé d'après la revendication n° 5, caractérisé par l'utilisation d'acide hydrobromique à titre de bromure.